# EUROPÄISCHE PATENTSCHRIFT

(11) **EP 3 003 797 B1**
(45) Veröffentlichungstag und Bekanntmachung des Hinweises auf die Patenterteilung: **08.08.2018**
(21) Anmeldenummer: 14724091.5
(22) Anmeldetag: 15.05.2014
(51) Int. Cl.: B60R 22/405, B60R 22/40

(54) **VERRIEGELUNGSEINHEIT MIT KUGELSENSOR FÜR EINEN SICHERHEITSGURTAUFROLLER**
LOCKING UNIT WITH BALL SENSOR FOR A SAFETY BELT RETRACTOR
UNITÉ DE VERROUILLAGE MUNIE D'UN CAPTEUR À BILLE POUR UN ENROULEUR DE CEINTURE DE SÉCURITÉ

(30) Priorität: 28.05.2013 AT 5007613 U
(43) Veröffentlichungstag der Anmeldung: 13.04.2016
(73) Patentinhaber: Fasching Salzburg GmbH, 5020 Salzburg (AT)
(72) Erfinder: FASCHING, Thomas, A-5020 Salzburg (AT)
(74) Vertreter: Schwarz & Partner Patentanwälte OG
(86) Internationale Anmeldenummer: PCT/EP2014/059965
(87) Internationale Veröffentlichungsnummer: WO 2014/191219

(56) Entgegenhaltungen:
- WO-A1-2012/062516
- DE-A1- 2 515 085
- FR-A- 1 407 549
- FR-A1- 2 520 622

## Beschreibung

Die Erfindung betrifft eine Verriegelungseinheit für einen Sicherheitsgurtaufroller, die an einem Ende einer Gurtbandspule des Sicherheitsgurtaufrollers vorgesehen ist, auf der ein Sicherheitsgurt aufgerollt ist und von der der Sicherheitsgurt in einer Ausziehrichtung abgerollt werden kann, wobei die Verriegelungseinheit dazu ausgebildet ist die Gurtbandspule zu verriegeln, wenn der Sicherheitsgurt schnell abgerollt wird, und wobei die Verriegelungseinheit in einer Einbaulage in einem Fahrzeug befestigbar ist und Kippverriegelungsmittel aufweist, die einen durch Schwerkraft beeinflussten Kugelsensor aufweisen und dazu ausgebildet sind die Gurtbandspule zu verriegeln, wenn der Sicherheitsgurtaufroller zumindest um einen Auslösewinkel aus der Einbaulage verkippt.

Eine solche Verriegelungseinheit ist aus dem Dokument WO 2012/062516 A1 bekannt, in der ein Sicherheitsgurtsystem und dessen Funktionen im Detail beschrieben sind. Die bekannte Verriegelungseinheit dient dazu, das Abrollen des Sicherheitsgurtes eines Kraftfahrzeuges zu unterbrechen, wenn es zu einer Fahrzeugkollision gekommen ist und der angeschnallte Fahrgast nach vorne geschleudert wird. In diesem Fall wird die Abrollgeschwindigkeit des Sicherheitsgurts schneller erhöht als dies durch Sicherheitsstandards festgelegt ist. Eine Auslöseeinheit der bekannten Verriegelungseinheit weist ein Trägheitsgewicht und eine Spiralfeder als Gegendruckfeder auf. Bei einer starken Beschleunigung der Gurtbandspule verzögert das Trägheitsgewicht die Beschleunigung der Auslöseeinheit, wodurch die Trägheitskraft des Trägheitsgewichts entgegen der Federkraft der Gegendruckfeder wirkt. Ab einer durch das Trägheitsgewicht und die Federkraft festgelegten Maximalbeschleunigung des Abrollvorganges kommt es dazu, dass der Verriegelungshebel entgegen der Federkraft so weit um den Drehpunkt verdreht wird, dass der Verriegelungsarm in das Innenzahnrad eingreift und die Gurtbandspule gegen weiteres Abrollen des Sicherheitsgurtes verriegelt.

Aus dem Stand der Technik bekannte Verriegelungseinheiten, wie beispielsweise die aus der DE 25 15 085 bekannte Verriegelungseinheit, weisen weiters Kippverriegelungsmittel auf, die einen durch Schwerkraft beeinflussten Kugelsensor aufweisen und dazu ausgebildet sind die Gurtbandspule zu verriegeln, wenn der Sicherheitsgurtaufroller zumindest um einen Auslösewinkel aus der Einbaulage verkippt. Hierdurch ist erreicht, dass die Gurtbandspule verriegelt wird, wenn das Fahrzeug sich stark neigt oder sich überschlägt.

Aus der FR 2 520 622 ist eine Verriegelungseinheit bekannt, die Kippverriegelungsmittel mit einem Pendel aufweisen, das in eine auf einer Spindel vorgesehene Gewindemutter mit Sperrzähnen eingreift, wenn das Fahrzeug verzögert oder auf einer abschüssigen Fahrbahn fährt.

Bei den bekannten Verriegelungseinheiten für einen Sicherheitsgurtaufroller hat sich als Nachteil erwiesen, dass nur mechanisch aufwendige Konstruktionen bekannt sind, die ein Ausziehen des Sicherheitsgurtes aus dem Sicherheitsgurtaufroller im Wesentlichen entgegen der Richtung der Schwerkraft ermöglichen. Die bekannten Sicherheitsgurtaufroller sind somit zumeist an einer Seite der Sitzfläche des Fahrzeugsitzes montiert und der Sicherheitsgurt wird von dem Fahrgast im Wesentlichen nach oben aus dem Sicherheitsgurtaufroller herausgezogen. Aus der FR 1 407 549 ist ein Sicherheitsgurtaufroller gemäß dem Oberbegriff des Anspruchs 1 bekannt.

Der Erfindung liegt die Aufgabe zugrunde, eine verbesserte Verriegelungseinheit für einen Sicherheitsgurtaufroller zu schaffen, die auch andere Einbaulagen und Befestigungspositionen des Sicherheitsgurtaufrollers in dem Fahrzeug ermöglicht.

Erfindungsgemäß wird diese Aufgabestellung durch einen Sicherheitsgurtaufroller mit den Merkmalen des Anspruchs 1 gelöst. Hierdurch ist der Vorteil erhalten, dass ein Sicherheitsgurtaufroller mit der erfindungsgemäßen Verriegelungseinheit beispielsweise in der Rückenlehne des Fahrzeugsitzes oder an dem Fahrzeug derart montiert werden kann, um den Sicherheitsgurt im Wesentlichen waagrecht, also quer zur Richtung der Schwerkraft, aus dem Sicherheitsgurtaufroller heraus zu ziehen.

Weitere vorteilhafte Ausgestaltungen der Erfindung werden im Folgenden anhand der Figuren näher erläutert.
Figur 1 zeigt einen Sicherheitsgurtaufroller mit Verriegelungseinheit in einer Explosionszeichnung.
Figur 2 zeigt einen Sicherheitsgurtaufroller mit Verriegelungseinheit und Kippverriegelungsmitteln am oberen Ende der Gurtbandspule in einer Vorderansicht.
Figur 3 zeigt den Sicherheitsgurtaufroller gemäß Figur 2 in einer Rückansicht.
Figur 4 zeigt einen Sicherheitsgurtaufroller mit Verriegelungseinheit und Kippverriegelungsmitteln am unteren Ende der Gurtbandspule in einer Vorderansicht.
Figur 5 zeigt eine Verriegelungseinheit mit einem Kugelsensor mit quer liegendem Verriegelungsarm.

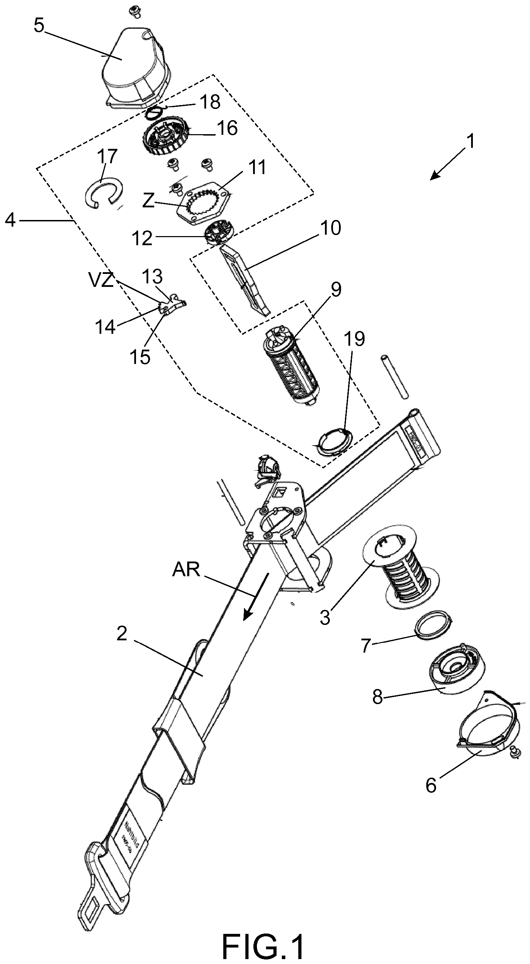

Figur 1 zeigt einen Sicherheitsgurtaufroller 1 des Sicherheitsgurtsystems eines Kraftfahrzeuges in einer Explosionszeichnung. Aufgabe des Sicherheitsgurtaufrollers 1 ist es, den Sicherheitsgurt 2 auf einer Gurtbandspule 3 aufzurollen und im Fall einer Fahrzeugkollision das Abrollen des Sicherheitsgurts 2 zu stoppen. Hierfür weist der Sicherheitsgurtaufroller 1 eine Verriegelungseinheit 4 auf, deren Einzelteile und Funktion nachfolgend näher erläutert sind.

Der Sicherheitsgurtaufroller 1 weist weiters ein Gehäuse mit zwei Gehäuseteilen 5 und 6 sowie eine Triebfeder 7 samt Federgehäuse 8 zum Aufrollen des Sicherheitsgurts 2 auf. In der Gurtbandspule 3 ist eine Gurtbandwelle 9 vorgesehen, durch die ein Einsatzteil 10 gesteckt wird, wobei sowohl die Gurtbandwelle 9 als auch der Einsatzteil 10 formschlüssig in der Gurtbandspule 3 sitzen und mit der Gurtbandspule 3 mitgedreht werden.

Die Verriegelungseinheit 4 ist an einem Ende der Gurtbandspule 3 auf dem Einsatzteil 10 formschlüssig montiert. Die Verriegelungseinheit 4 weist einen Zahnring 11 mit Innenzahnrad Z auf, wobei der Zahnring 11 mit dem Gehäuse verbunden ist und sich folglich beim Auf- und Abrollen des Sicherheitsgurtes 2 nicht mit dreht. In der Gurtbandwelle 9 ist von der Mitte der Gurtbandspule 3 beziehungsweise von ihrer Drehachse entfernt eine Vertiefung vorgesehen, in der ein Drehpunkt D eines Verriegelungshebels 13 drehbar gelagert ist. Der Verriegelungshebel 13 kann um den Drehpunkt D in eine Verriegelungsposition und in eine Freigabeposition verdreht werden. In der Verriegelungsposition blockiert die Verriegelungseinheit 4 über den Einsatzteil 10 und die Gurtbandwelle 9 das Drehen der Gurtbandspule 3, wohingegen sich die Gurtbandspule 3 in der Freigabeposition frei drehen kann.

Der Verriegelungshebel 13 weist weiters einen Verriegelungsarm 14 auf, an dessen Ende drei Verriegelungszähne VZ vorgesehen sind. Wenn der Verriegelungshebel 13 in seine Verriegelungsposition verstellt ist, dann greifen die drei Verriegelungszähne VZ in drei Zahnlücken des Innenzahnrads Z und blockieren so die Gurtbandrolle 3. Der Verriegelungshebel 13 weist weiters einen Betätigungsarm 15 auf, in den ein Übertragungsarm einer Auslöseeinheit eingreift.

Die Auslöseeinheit ist durch ein Zahnrad 16, ein Trägheitsgewicht 17 und eine Drehfeder 18, als Sensitivitätsfeder des Auslösemechanismus, und einen Mitnehmer 12 gebildet. Der mit dem Verriegelungsarm 15 des Verriegelungshebels 13 im Eingriff befindliche Übertragungsarm ist auf der Unterseite des Zahnrads 16 vorgesehen. Das Zahnrad 16 sitzt auf dem Mitnehmer 12, der seinerseits auf dem Einsatzteil 10 sitzt und sich über die Gurtbandwelle 9 mit der Gurtbandspule 3 mitdreht. Das Zahnrad 16 ist in dem Mitnehmer 12 drehbar gelagert, wobei der Drehbereich auf einen bestimmten Winkelbereich eingeschränkt ist, der gerade dem Verstellweg des Verriegelungshebels 13 zwischen seiner Verriegelungsposition und seiner Freigabeposition entspricht. Die Drehfeder 18 ist zwischen dem Mitnehmer 12 und dem Zahnrad 16 eingespannt und verdreht das Zahnrad 16, und über den Übertragungsarm des Zahnrads 16 auch den Verriegelungshebel 13, in einer Ruheposition in die Freigabeposition des Verriegelungshebels 13. Das Trägheitsgewicht 17 ist in dem Zahnrad 16 fix eingespannt.

Wenn die Drehgeschwindigkeit der Gurtbandspule 3, beispielsweise bei einer Fahrzeugkollision, rasch zunimmt, weil ein Fahrgast in den Sicherheitsgurt 2 hinein fällt, dann beschleunigt der Mitnehmer 12 mit der Gurtbandspule 3 rasch. Durch das Gewicht des Trägheitsgewichts 17 wirkt eine Trägheitskraft entgegen dieser Beschleunigung, wodurch das Zahnrad 16 entgegen der Federkraft der Drehfeder 18 gegenüber dem Mitnehmer 12 zurück bleibt und den Verriegelungshebel 13 verstellt. Durch die Dimensionierung des Trägheitsgewichts 17 und der Drehfeder 18 ist jene Beschleunigung der Gurtbandspule 3 festgelegt, ab der der Verriegelungshebel 13 durch die Auslöseeinheit in seine Verriegelungsposition verstellt wird und die weitere Drehung der Gurtbandspule 3 verhindert. Die Verriegelungseinheit 4 des Sicherheitsgurtaufrollers 1 weist weiters eine Endverriegelungssperre auf, die durch einen Abdeckring 19 und ein Ausnehmung A in einem Teil des Umfangs der Gurtbandwelle 9 gebildet ist.

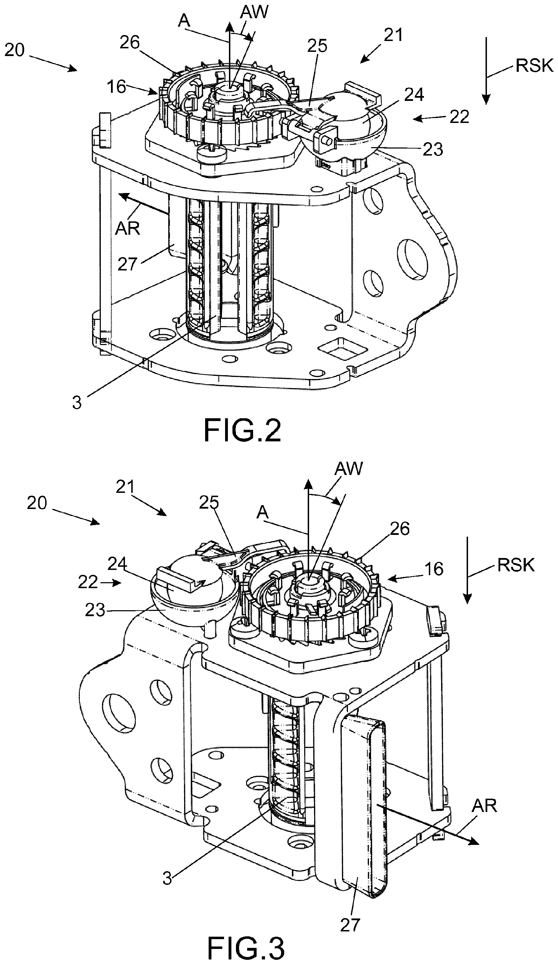

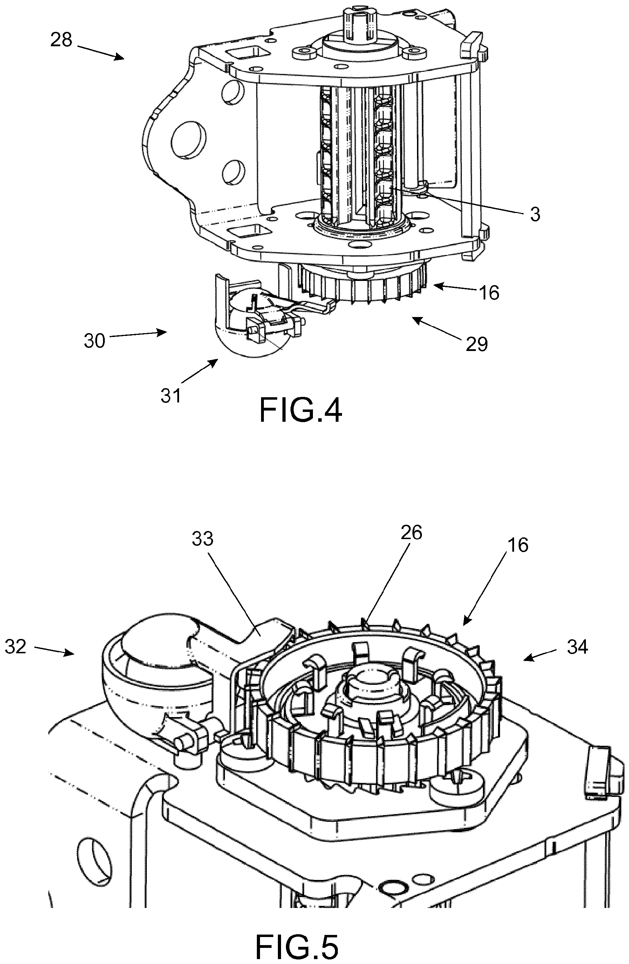

Eine in den Figuren 3 und 4 dargestellte erfindungs gemäße Verriegelungseinheit 20 weist nunmehr zusätzlich zu der in der Figur 1 dargestellten Verriegelungseinheit 4 Kippverriegelungsmittel 21 auf, die einen durch Schwerkraft beeinflussten Kugelsensor 22 aufweisen und dazu ausgebildet sind die Gurtbandspule 3 zu verriegeln, wenn der Sicherheitsgurtaufroller 1 zumindest um einen Auslösewinkel AW aus der Einbaulage verkippt wird. Die Kippverriegelungsmittel 21 sind durch das Zahnrad 16 und den Kugelsensor 22 gebildet, der seinerseits durch eine Halbschale 23, eine Kugel 24 und einen Verriegelungsarm 25 gebildet ist. Die Kugel 24 ist in der Halbschale 23 mittels Schwerkraft gelagert und rollt somit jeweils in den tiefsten Punkt der Halbschale 23 in Richtung der Schwerkraft RSK. Der Verriegelungsarm 25 ist gemäß dem in Figur 2 dargestellten Ausführungsbeispiel der Erfindung am Rand der Halbschale 23 gelagert, weist ebenfalls eine Schale auf und steht schräg von der Halbschale 23 in Richtung des Zahnrads 16 ab. Das Zahnrad 16 weist an seiner Stirnseite Zähne 26 auf, in die das Ende des Verriegelungsarms 25 einrastet, wenn das Fahrzeug und somit der Sicherheitsgurtaufroller 1 aus seiner Einbaulage zumindest um den Auslösewinkel AW verkippt wird. Durch das Verkippen rollt die Kugel 24 in der Halbschale 23 und drückt auf die Schale des Verriegelungsarms 25, wodurch dieser das Zahnrad 16 und somit die Gurtbandspule 3 verriegelt. Figur 3 zeigt den Sicherheitsgurtaufroller 1 gemäß Figur 2 in einer Rückansicht.

Die Verriegelungseinheit 20 ist in den Figuren 2 und 3 in Einbaulage dargestellt und, wie vorstehend erläutert, sind die Kippverriegelungsmittel 21 derart ausgebildet und in der Verriegelungseinheit 20 angeordnet, um eine Ausziehrichtung AR des Sicherheitsgurtes 2 im Wesentlichen quer zur Richtung der Schwerkraft RSK zu ermöglichen. Hierdurch ist der Vorteil erhalten, dass der Sicherheitsgurtaufroller 1 an Positionen im Fahrzeug oder im Fahrzeugsitz montiert werden kann, die mit herkömmlichen Sicherheitsgurtaufrollern nicht verwendet werden konnten. So kann der Sicherheitsgurtaufroller 1 beispielweise in die Rückenlehne des Fahrzeugsitzes integriert werden und aus dem Führungsschlitz 27 im Wesentlichen waagrecht beziehungsweise im Wesentlichen senkrecht zur Richtung der Schwerkraft RSW herausgezogen werden. "Im Wesentlichen" ist hierbei so zu verstehen, dass die Ausziehrichtung AR des Sicherheitsgurts 2 vorteilhaft in einem Winkelbereich von 60 Grad bis 120 Grad zur Richtung der Schwerkraft RSK liegt.

Figur 4 zeigt einen Sicherheitsgurtaufroller 28 gemäß einem weiteren Ausführungsbeispiel der Erfindung mit einer Verriegelungseinheit 29 und Kippverriegelungsmitteln 30 am unteren Ende der Gurtbandspule 3 in einer Vorderansicht. Der Kugelsensor 31 ist hierfür im Vergleich zu der Verriegelungseinheit 20 gemäß dem Ausführungsbeispiel in den Figuren 2 und 3 um 180 Grad verdreht in der Verriegelungseinheit 29 angeordnet. Der Verriegelungsarm greift bei diesem Ausführungsbeispiel ebenfalls in Zähne an der Stirnseite des Zahnrads 16 ein. Je nach Platz im Fahrzeug und gewünschter Ausziehrichtung AR kann entweder der Sicherheitsgurtaufroller 1 mit der Verriegelungseinheit 20 am oberen Ende der Gurtbandrolle 3 oder der Sicherheitsgurtaufroller 28 mit der Verriegelungseinheit 29 am unteren Ende der Gurtbandrolle 3 vorteilhaft verwendet werden.

Figur 5 zeigt eine Verriegelungseinheit 31 gemäß einem weiteren Ausführungsbeispiel der Erfindung mit einem Kugelsensor 32 mit quer liegendem Verriegelungsarm 33, der ebenfalls in die Zähne 26 an der Stirnseite des Zahnrads 16 eingreift. Gemäß einem weiteren in den Figuren nicht dargestellten Ausführungsbeispiel der Erfindung könnte der Verriegelungsarm auch so auf der Halbschale gelagert sein, dass das Ende des Verriegelungsarms in die Zähne am Umfang des Zahnrades 16 eingreift. Je nach Platzangebot in dem Fahrzeug und erwünschter Baugröße sind dem Fachmann in Kenntnis der Erfindung weitere in den Figuren nicht dargestellte Ausführungsbeispiele der Erfindung eines Sicherheitsgurtaufrollers mit Kippsicherungsmitteln aufweisender Verriegelungseinheit nahegelegt, denen gemeinsam ist eine Ausziehrichtung AR des Sicherheitsgurtes 2 im Wesentlichen quer zur Richtung der Schwerkraft RSK zu ermöglichen.

Die Konstruktion des Kippverriegelungsmittel, bei der die Rotationsachse A des Zahnrads 16 im Wesentlichen in Richtung der Schwerkraft RSK, bei in Einbaulage angeordneter Verriegelungseinrichtung, und somit auch in der Rotationsachse A der Gurtbandspule 3 angeordnet ist, hat sich zum Erreichen der im Wesentlichen waagrechten Ausziehrichtung AR des Sicherheitsgurts 2 als besonders vorteilhaft herausgestellt. Der Kugelsensor ist erfindungsgemäß im Bezug auf die Größe und Anordnung der Halbschale 23, der Kugel 24 und dem Verriegelungsarm 25 so ausgebildet, dass er zum Verriegeln der Gurtbandspule 3 ab einem Auslösewinkel AW von zumindest 20 Grad und insbesondere von 27 Grad ausgebildet ist. Weiters ist der Kugelsensor dazu ausgebildet die Gurtbandspule 3 freizugeben, wenn der Auslösewinkel kleiner 15 Grad und insbesondere kleiner 12 Grad ist.

## Patentansprüche

1. Sicherheitsgurtaufroller (1) mit einer Verriegelungseinheit (20; 29; 31) für den Sicherheitsgurtaufroller (1), die an einem Ende einer Gurtbandspule (3) des Sicherheitsgurtaufrollers (1) vorgesehen ist, auf der ein Sicherheitsgurt (2) aufgerollt ist und von der der Sicherheitsgurt (2) in einer Ausziehrichtung (AR) abgerollt werden kann, wobei die Verriegelungseinheit (20; 29; 31) dazu ausgebildet ist die Gurtbandspule (3) zu verriegeln, wenn der Sicherheitsgurt (2) schnell abgerollt wird, und wobei der Sicherheitsgurtaufroller (1) mit der die Verriegelungseinheit (20; 29; 31) in einer Einbaulage in einem Fahrzeug befestigbar ist und die Verriegelungseinheit (20; 29; 31) Kippverriegelungsmittel (21; 30) aufweist, die dazu ausgebildet sind die Gurtbandspule (3) zu verriegeln, wenn der Sicherheitsgurtaufroller (1) zumindest um einen Auslösewinkel (AW) aus der Einbaulage verkippt, wobei die Kippverriegelungsmittel (21; 30) derart ausgebildet und in der Verriegelungseinheit (20; 29; 31) angeordnet sind, um eine Ausziehrichtung (AW) des Sicherheitsgurtes (2) im Wesentlichen quer zur Richtung der Schwerkraft (RSK) zu ermöglichen, wobei die Kippverriegelungsmittel (21; 30) zumindest durch ein Zahnrad (16) gebildet sind, wobei das Zahnrad (16) an seiner Stirnseite Zähne (26) aufweist, wobei der Sicherheitsgurtaufroller (1) einen mit der Gurtbandspule (3) mitdrehenden Mitnehmer (12) aufweist, und das Zahnrad (16) in dem Mitnehmer (12) um einem Winkelbereich drehbar gelagert ist, **dadurch gekennzeichnet, dass** die Kippverriegelungsmittel (21; 30) einen durch Schwerkraft beeinflussten Kugelsensor (22; 31; 32) aufweisen, der durch eine Halbschale (23), eine Kugel (24) und einen, an der Halbschale (23) schwenkbar gelagerten, Verriegelungsarm (25; 33) gebildet ist, und wobei die in der Halbschale (23) mittels Schwerkraft gelagerte Kugel (24) auf den Verriegelungsarm (25; 33) einen Druck ausübt, welcher den Verriegelungsarm (25; 33) verschwenkt und in das Zahnrad (16) einrastet, wenn der Sicherheitsgurtaufroller (1) zumindest um den Auslösewinkel (AW) aus der Einbaulage verkippt wird, und wobei der Verriegelungsarm (15; 33) zum Verriegeln der Gurtbandspule (3) in die Zähne (26) des Zahnrads (16) von der Stirnseite des Zahnrads (16) her eingreift.

2. Sicherheitsgurtaufroller (1) gemäß Anspruch 1, **dadurch gekennzeichnet, dass** das Zahnrad an seinem Umfang Zähne aufweist, in die der Verriegelungsarm zum Verriegeln der Gurtbandspule eingreift.

3. Sicherheitsgurtaufroller (1) gemäß einem der vorherigen Ansprüche, **dadurch gekennzeichnet, dass** die Rotationsachse (A) des Zahnrads (16) im Wesentlichen in Richtung der Schwerkraft (RSK) angeordnet ist.

4. Sicherheitsgurtaufroller (1) gemäß einem der vorherigen Ansprüche, **dadurch gekennzeichnet, dass** die Verriegelungseinheit (20; 29; 31) in Einbaulage am oberen beziehungsweise am unteren Ende der Gurtbandspule (3) angeordnet ist.

5. Sicherheitsgurtaufroller (1) gemäß einem der vorherigen Ansprüche, **dadurch gekennzeichnet, dass** der Kugelsensor (22; 31; 32) zum Verriegeln der Gurtbandspule (3) bei einem Auslösewinkel (AW) von zumindest 20 Grad und insbesondere von 27 Grad ausgebildet ist.

6. Sicherheitsgurtaufroller (1) gemäß einem der vorherigen Ansprüche, **dadurch gekennzeichnet, dass** der Kugelsensor (22; 31; 32) dazu ausgebildet ist die Gurtbandspule (3) freizugeben, wenn der Auslösewinkel (AW) kleiner 15 Grad und insbesondere kleiner 12 Grad ist.

7. Sicherheitsgurtaufroller (1) gemäß einem der vorherigen Ansprüche, **dadurch gekennzeichnet, dass** die Kippverriegelungsmittel (21; 30) derart ausgebildet und in der Verriegelungseinheit (20; 29; 31) angeordnet sind, um eine Ausziehrichtung (AR) des Sicherheitsgurtes (2) im Bereich von 60 Grad bis 120 Grad zur Richtung der Schwerkraft (RSK) zu ermöglichen.

## Claims

1. A safety belt retractor (1) comprising a locking unit (20; 29; 31) for the safety belt retractor (1) which is provided on one end of a belt strap reel (3) of the safety belt retractor (1), onto which a safety belt (2) is rolled and from which the safety belt (2) can be unrolled in a withdrawal direction (AR), wherein the locking unit (20; 29; 31) is designed for locking the belt strap reel (3) when the safety belt (2) is unrolled rapidly, and wherein the safety belt retractor (1) with the locking unit (20; 29; 31) can be fastened in a vehicle in an installation position, and the locking unit (20; 29; 31) comprises tilt locking means (21; 30) which are designed for locking the belt strap reel (3) when the safety belt retractor (1) tilts out of the installation position by at least a trigger angle (AW), wherein the tilt locking means (21; 30) are designed and arranged in the locking unit (20; 29; 31) in such a manner as to allow a withdrawal direction (AW) of the safety belt (2) substantially transversely to the direction of gravity (RSK), wherein the tilt locking means (21; 30) are formed by at least one toothed wheel (16), the toothed wheel (16) comprising teeth (26) on its front side, wherein the safety belt retractor (1) comprises a catch (12) rotating along with the belt strap reel (3), and the toothed wheel (16) is mounted within the catch (12) so as to be rotatable about an angle range, **characterized in that** the tilt locking means (21; 30) comprise a ball sensor (22; 31; 32) influenced by gravity and formed by a half shell (23), a ball (24) and a locking arm (25; 33) pivotably mounted on the half shell (23), and wherein the ball (24) embedded by gravity within the half shell (23) applies pressure to the locking arm (25; 33), which pivots the locking arm (25; 33), engaging it with the toothed wheel (16), when the safety belt retractor (1) is tilted out of the installation position by at least the trigger angle (AW), and wherein the locking arm (15; 33) engages the teeth (26) of the toothed wheel (16) from the front side of the toothed wheel (16) for locking the belt strap reel (3).

2. A safety belt retractor (1) according to claim 1, **characterized in that** the toothed wheel exhibits teeth on its circumference the locking arm engages for locking the belt strap reel.

3. A safety belt retractor (1) according to any of the preceding claims, **characterized in that** the axis of rotation (A) of the toothed wheel (16) is arranged essentially in the direction of gravity (RSK).

4. A safety belt retractor (1) according to any of the preceding claims, **characterized in that** the locking unit (20; 29; 31) is arranged in the installation position at the upper end or, respectively, at the lower end of the belt strap reel (3).

5. A safety belt retractor (1) according to any of the preceding claims, **characterized in that** the ball sensor (22; 31; 32) is designed for locking the belt strap reel (3) at a trigger angle (AW) of at least 20 degrees and, in particular, of 27 degrees.

6. A safety belt retractor (1) according to any of the preceding claims, **characterized in that** the ball sensor (22; 31; 32) is designed for releasing the belt strap reel (3) when the trigger angle (AW) is smaller than 15 degrees and, in particular, smaller than 12 degrees.

7. A safety belt retractor (1) according to any of the preceding claims, **characterized in that** the tilt locking means (21; 30) are designed and arranged in the locking unit (20; 29; 31) in such a manner as to allow a withdrawal direction (AR) of the safety belt (2) within a range of from 60 degrees to 120 degrees relative to the direction of gravity (RSK).

## Revendications

1. Enrouleur de ceinture de sécurité (1) comprenant une unité de verrouillage (20 ; 29 ; 31) pour l'enrouleur de ceinture de sécurité (1), laquelle est prévue à une extrémité de la bobine de bande de ceinture (3) de l'enrouleur de ceinture de sécurité (1) sur laquelle une ceinture de sécurité (2) est enroulée et depuis laquelle la ceinture de sécurité (2) peut être déroulée dans une direction d'extraction (AR), et l'unité de verrouillage (20 ; 29 ; 31) est réalisée pour verrouiller la bobine de bande de ceinture (3) lorsque la ceinture de sécurité (2) est rapidement déroulée, et l'enrouleur de ceinture de sécurité (1) avec lequel l'unité de verrouillage (20 ; 29 ; 31) peuvent être fixés dans une situation de montage dans un véhicule et l'unité de verrouillage (20 ; 29 ; 31) comprend des moyens de verrouillage basculants (21 ; 30) qui sont réalisés afin de verrouiller la bobine de bande de ceinture quand l'enrouleur de ceinture de sécurité bascule, au moins un angle de déclenchement (AW) depuis la situation de montage, dans lequel les moyens de verrouillage basculants (21 ; 30) sont réalisés de telle manière et agencés dans l'unité de verrouillage (20 ; 29 ; 31) de telle façon qu'ils permettent une direction d'extraction (AW) de la ceinture de sécurité (2) essentiellement perpendiculairement à la direction de la gravité (RSK), dans lequel les moyens de verrouillage basculants (21 ; 30) sont réalisés au moins par une roue dentée (16), ladite roue dentée (16) présentant des dents (26) sur son côté frontal, et l'enrouleur de ceinture de sécurité (1) comprend un élément d'entraînement (12) qui tourne conjointement avec la bobine de bande de ceinture (3), et la roue dentée (16) est montée dans l'élément d'entraînement (12) avec possibilité de rotation sur une plage angulaire,
**caractérisé en ce que** les moyens de verrouillage basculants (21 ; 32) comprennent un capteur sphérique (22 ; 31 ; 32) influencé par la gravité, qui est formé par une demi-coque (23), une bille (24) et un bras de verrouillage (25 ; 33) monté en pivotement sur la demi-coque (23), et dans lequel la bille (24) logée dans la demi-coque (23) au moyen de la gravité exerce sur le bras de verrouillage (25 ; 33) une pression qui fait basculer le bras de verrouillage (25 ; 33) et le fait s'enclencher dans la roue dentée (16) quand l'enrouleur de ceinture de sécurité (1) est basculé, à partir de la situation de montage, au moins l'angle de déclenchement (AW), et dans lequel le bras de verrouillage (15 ; 33) s'engage, pour le verrouillage de la bobine de bande de ceinture (3), dans les dents (26) de la roue dentée (16) en provenance du côté frontal de la roue dentée (16).

2. Enrouleur de ceinture de sécurité (1) selon la revendication 1, **caractérisé en ce que** la roue dentée comporte sur sa périphérie des dents dans lesquels s'engage le bras de verrouillage afin de verrouiller la bobine de bande de ceinture.

3. Enrouleur de ceinture de sécurité (1) selon l'une des revendications précédentes, **caractérisé en ce que** l'axe de rotation (A) de la roue dentée (16) est agencé sensiblement en direction de la gravité (RSK).

4. Enrouleur de ceinture de sécurité (1) selon l'une des revendications précédentes, **caractérisé en ce que**, dans la situation de montage, l'unité de verrouillage (20 ; 29 ; 31) est agencée à l'extrémité supérieure ou respectivement à l'extrémité inférieure de la bobine de bande de ceinture (3).

5. Enrouleur de ceinture de sécurité (1) selon l'une des revendications précédentes, **caractérisé en ce que** le capteur à bille (22 ; 31 ; 32) est réalisée pour verrouiller la bobine de bande de ceinture (3) à un angle de déclenchement (AW) d'au moins 20 degrés et en particulier de 27 degrés.

6. Enrouleur de ceinture de sécurité (1) selon l'une des revendications précédentes, **caractérisé en ce que** le capteur à bille (22 ; 31 ; 32) est réalisé pour libérer la bobine de bande de ceinture (3) quand l'angle de déclenchement (AW) est inférieur à 15 degrés et en particulier inférieur à 12 degrés.

7. Enrouleur de ceinture de sécurité (1) selon l'une des revendications précédentes, **caractérisé en ce que** les moyens de verrouillages basculants (21 ; 30) sont réalisés de telle façon et sont agencées dans l'unité de verrouillage (20 ; 29 ; 31) de telle manière qu'ils permettent une direction d'extraction (AR) de la ceinture de sécurité (2) dans la plage de 60 degrés à 120 degrés par rapport à la direction de la gravité (RSK).
